Europäisches Patentamt

(19) **European Patent Office**

Office européen des brevets

(11) Publication number: **0 243 624**
**B1**

(12) # EUROPEAN PATENT SPECIFICATION

(45) Date of publication of the patent specification:
**25.10.89**

(21) Application number: **87103321.3**

(22) Date of filing: **09.03.87**

(51) Int. Cl.⁴: **F16D 55/22**, F16D 55/224

(54) Anti-rattle spring for a disc brake.

(30) Priority: **29.04.86 US 857900**

(43) Date of publication of application:
**04.11.87 Bulletin 87/45**

(45) Publication of the grant of the patent:
**25.10.89 Bulletin 89/43**

(84) Designated Contracting States:
**DE ES FR GB IT SE**

(56) References cited:
**EP-A- 0 030 502**
**EP-A- 0 165 088**
**DE-A- 2 931 071**
**DE-A- 3 313 680**
**FR-A- 2 552 512**
**GB-A- 2 158 170**

(73) Proprietor: **ALLIED-SIGNAL INC. (a Delaware corporation), Columbia Road and Park Avenue P.O. Box 2245R, Morristown New Jersey 07960(US)**

(72) Inventor: **Demoise, Thomas Edwin, Jr. c/o Allied Corporation, 401 Bendix Drive P.O. Box 4001, South Bend Indiana 46634(US)**

(74) Representative: **Lejet, Christian, Division Technique Service Brevets BENDIX Europe 126, rue de Stalingrad, F-93700 Drancy(FR)**

ACTORUM AG

## Description

The present invention comprises an anti-rattle spring for a disc brake, particularly a disc brake having a pair of friction pads members supported by pins positioned on the caliper.

The prior art has provided many constructions and designs for slidably supporting friction pads on each side of a brake disc. The friction pad members may be slidably supported on the torque support member, or may be slidably supported by pins which in turn are supported by the caliper. When the pins are supported by the caliper and extend through openings in the friction pads members so that the members may slide axially to engage and brake the rotating disc, the pins are typically secured axially in place by a hitchpin at each end of the respective pin. Likewise, in order to prevent rattling of the pad members, relative to the pins upon which they are supported, an anti-rattle spring is utilized normally between each friction pad member and one or both of the associated pins, thus requiring two anti-rattle springs. It is desirable to economize the structure of the disc brake by eliminating unnecessary parts and simplifying the assembly and disassembly.

In DE-A 3 313 680 there is disclosed a disc brake which comprises an anti-rattle spring extending between two pins and over radially outer portions of the friction pad members, the anti-rattle spring having a pair of oppositely disposed end each engaging and gripping a respective pin so as to axially immobilize the pin, the anti-rattle spring engaging the radially outer portions of the friction pad members to bias the friction pad member radially inwardly against said pins.

In DE-A 2 931 071, there is disclosed another anti-rattle spring extending diagonally between the pins.

However such known anti-rattle springs are not easy to manufacture and/or not easy to use and to position correctly.

One object of this invention is to obviate these disadvantages.

Consequently, the invention relates to a disc brake comprising a caliper slidably supported on a torque support member and having a bridge extending over a disc and piston means for biasing a friction pad member into engagement with one side of the disc and, by reaction via the caliper, a second friction pad member into engagement with the other side of disc, the friction pad members each having a pair of openings for support thereof, pins each extending between a pair of support positions on the caliper and extending through respective openings in order to position the friction pad members for slidable movement along the pins, anti-rattle spring means comprising an anti-rattle spring extending diagonally between the pins and over radially outer portions of the friction pad members, the anti-rattle spring having a pair of oppositely disposes ends each engaging and gripping a respective pin so as to axially immobilize the pin, the spring engaging the radially outer portions of the friction pad members radially inwardly against the pins.

According to the invention, each pin has a groove located adjacent an end thereof, the ends of the anti-rattle spring each being received within a respective groove, each end of the anti-rattle spring comprising an annular-shaped loop having an open portion, the annular-shaped loop being received within an associated groove in order to axially immobilize the respective pin, the support positions each comprising a radial wall having a hole for receiving slidably the associated pin, and each loop being received within a groove and positioned axially between the associated support plate and radial wall.

Preferingly, each friction pad member includes a support plate, the openings being disposed within the support plates and located radially outwardly at the periphery of the friction pad members.

Each end of the anti-rattle spring extends radially inwardly toward a central axis of the caliper and engages a circumferential surface of an associated friction pad member before extending transversely across the radially outer portions of the friction pad members.

The present invention provides three distinct advantages over prior disc brake designs. First, the single anti-rattle spring eliminates the necessity for two anti-rattle springs, eliminates the need for two hitchpins utilized to retain each pin, and the assembly and disassembly process is greatly simplified.

One way of carrying out the invention is described in detail below with reference to the drawings which illustrate an embodiment, in which:

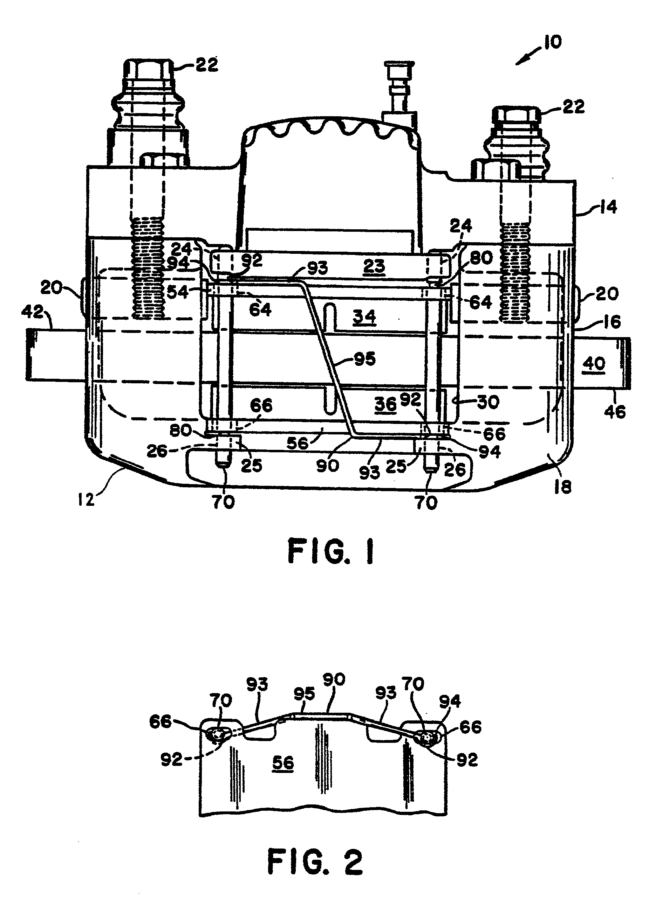

Figure 1 is a top view of the disc brake and anti-rattle spring of the present invention; and
Figure 2 is a segmented view of the outer friction pad member, pins, and spring of Figure 1.

The disc brake of the present invention is designated generally by reference numeral 10. Disc brake 10 comprises a caliper 12 having an inner portion 14 extending into a bridge 16 and axially outer portion 18. The caliper is slidably supported on torque support member 20 by means of pins 22. The caliper inner portion 14 includes a radial wall 23 with a pair of pin openings 24 and the outer portion includes radial walls 25 with a corresponding pair of pin openings 26. The caliper has a central opening 30 providing for the insertion and removal of a pair of friction pad members 34 and 36. Inner friction pad member 34 is disposed adjacent a piston and a surface 42 of disc 40, and outer friction pad member 36 is disposed adjacent surface 46 of disc 40. The friction pad members include support plates 54 and 56, respectively, the support plates having support openings 64 and 66, respectively. A pair of pins 70 have respective ends located slidably within pin openings 24 and 26 of the caliper, and the pins also extend through associated support openings 64 and 66 of the plates 54, 56. Each pin 70 includes adjacent an end thereof a groove 80 designed to be located axially outside each support plate when the friction pads members are positioned adjacent the associated surfaces of the disc 40.

Anti-rattle spring 90 comprises a Z-shaped round spring member having at each end a loop 92 with an open portion 94. The anti-rattle spring 90 extends diagonally between pins 70 and over the radially outermost portions or tops of friction pad members 34, 36 so as to bias the members radially inwardly. Each loop 92 is received within an associated groove 80, and an arm 93 extends circumferentially inwardly adjacent an associated surface of the support plate until extending into a transverse portion 95 which traverses the tops of friction pad members 34, 36 and disc 40. Because each end and loop 92 of anti-rattle spring 90 is bent downwardly in order to be received within a groove 80 and about pin 70, the spring 90 biases friction pad members 34 and 36 radially inwardly so that the members are biased against the pins to prevent rattling of pins 70 in openings 64, 66.

The present invention provides substantial advantages over prior designs because only a single anti-rattle spring is required. Previously, an anti-rattle spring would be utilized with each friction pad member, and thereby requiring two anti-rattle springs. The present anti-rattle spring is much easier to manufacture and thus provides a cost savings. Secondly, the spring is a dual purpose which effects anti-rattle engagement of the friction pad members with the pins while also locating and retaining axially the pins. Because the engagement of loops 92 in grooves 80 axially positions and retains pins 70, there is eliminated the requirement of two hitchpins located one at each end of a respective pin 70 in order to axially fix-in-place or retain the pin. Caliper assembly and disassembly is greatly simplified by utilization of the present invention. In order to replace worn pad members and insert new friction pad members, there is required the removal of only one spring which then permits the friction pad members and pins to be removed easily. Previous designs required removal of the two hitchpins from each pin 70 and the removal of two anti-rattle springs in order to perform the same service. The anti-rattle spring of the present invention is removed by biasing an end radially inwardly with a tool until the loop 92 disengages from the groove 80, and while loop 92 is disengaged the associated pin 70 may be axially displaced, inwardly or outwardly, until the loop 92 and associated end of the spring is free to move radially upwardly so that the transverse portion no longer engages the tops of the friction pad members. When the other loop 92 is removed from the associated groove 80, then pins 70 may be displaced axially inwardly or outwardly so that the friction pad members may be removed radially from central opening 30. Because the anti-rattle spring is symmetrical and the open portions 94 must be positioned radially outwardly in order for the loops 92 to remain fastened within grooves 80, the spring can't be inserted or assembled improperly during caliper assembly and servicing. Depending on the desired design for a particular disc brake, spring 90 may also extend diagonally in the opposite direction so that the opposite diagonally aligned grooves 80 are utilized.

It is reasonably to be expected that those skilled in the art can make numerous revisions and additions to the invention and it is intended that such revisions and additions will be included in the scope of the following claims as equivalents of the invention.

## Claims

1. Disc brake comprising a caliper (12) slidably supported on a torque support member (20) and having a bridge (16) extending over a disc (40) and piston means for biasing a friction pad member (34) into engagement with one side (42) of said disc (40) and, by reaction via the caliper (12), a second friction pad member (36) into engagement with the other side (42) of said disc (40), the friction pad members (34, 36) each having a pair of openings (64, 66) for support thereof, pins (70) each extending between a pair of support positions (23, 24 25, 26) on said caliper (12) and extending through respective openings (64, 66) in order to position the friction pad members (34, 36) for slidable movement along said pins (70), anti-rattle spring means (90) comprising an anti-rattle spring (90) extending between said pins (70) and over radially outer portions of said friction pad members (34, 36), the anti-rattle spring (90) having a pair of oppositely disposes ends (92, 94) each engaging and gripping a respective pin (70) so as to axially immobilize the pin (70), the spring (90) engaging the radially outer positions of said friction pad members (34, 36) to bias the friction pad members (34, 36) radially inwardly against said pins (70), characterized in that each pin (70) has groove (80) located adjacent an end thereof that the anti-rattle spring (90) extends diagonally between said pins (70), the ends (92, 94) of the anti-rattle spring (90) each being received within a respective groove (80), each end (92, 94) of the anti-rattle spring (90) comprising an annular-shaped loop (92) having an open portion (94), the annular-shaped loop (92) being received within an associated groove (80) in order to axially immobilize the respective pin (70), the support positions (23, 24, 25, 26) each comprising a radial wall (23, 25) having a hole (24, 26) for receiving slidably the associated pin (70), and each loop (92) being received within a groove (80) and positioned axially between the associated support plate (54, 56) and radial wall (23, 25).

2. Disc brake in accordance with claim 1, characterized in that each friction pad member (34, 36) includes a support plate (54, 56), the openings (64, 66) being disposed within the support plates (54, 56) and located radially outwardly at the periphery of the friction pad members (34, 36).

3. Disc brake in accordance with claim 1 or 2, characterized in that each end (92, 94) of the anti-rattle spring (90) extends radially inwardly toward a central axis of said caliper (12) and engages a circumferential surface of an associated friction pad member (34, 36) before extending transversely across the radially outer portions of said friction pad members (34, 36).

4. Disc brake in accordance with anyone of the preceding claims, characterized in that the anit-rattle spring (90) is substantially Z-shaped and engages each pin (70) at only one groove (80) in order to immobilize the resprective pin (70).

5. Disc brake in accordance with anyone of the preceding claims, characterized in that the open portions (94) of the spring (90) are disposed radially outwardly relative to the disc (40).

6. Disc brake in accordance with anyone of the preceding claims, characterized in that the caliper (12) is slidably supported on the support member (20) by means of pin members (22) fixedly attached to the support member (20).

**Patentansprüche**

1. Scheibenbremse mit einem Bremssattel (12), der auf einem Bremsträger (20) gleitbar gelagert ist und eine sich über eine Bremsscheibe erstreckende Brücke (16) sowie eine Kolbenanordnung aufweist, die einen Bremsbacken (34) in Anlage mit einer Seite (42) der Bremsscheibe (40) und durch Reaktion über den Bremssattel (12) einen zweiten Bremsbacken (36) in Anlage mit der anderen Seite (42) der Bremsscheibe (40) drückt, wobei jeder Bremsbacken (34, 36) zwei Öffnungen (64, 66) zu seiner Lagerung aufweist, Stifte (70) jeweils zwischen zwei Abstützstellen (23, 24, 25, 26) am Bremssattel (12) verlaufen und sich durch entsprechende Öffnungen (64, 66) erstrecken, um die Bremsbacken (34, 36) zum Zwecke einer Gleitbewegung auf den Stiften (70) zu positionieren, eine Antiratterfederanordnung (90) eine Antiratterfeder (90) aufweist, die sich zwischen den Stiften (70) und über radial äußere Abschnitte der Bremsbacken (34, 36) erstrecken, die Antiratterfeder (90) zwei entgegengesetzt liegende Enden (92, 94) aufweist, die jeweils an einem entsprechenden Stift (70) angreifen und ihn erfassen, um den Stift (70) axial festzulegen, die Feder (90) an den radial äußeren Abschnitten der Bremsbacken (34, 36) angreift, um die Bremsbacken (34, 36) radial nach innen gegen die Stifte (70) vorzuspannen, dadurch gekennzeichnet, daß jeder Stift (70) eine Nut (80) besitzt, die angrenzend an einem Ende desselben angeordnet ist, daß die Antiratterfeder (90) sich diagonal zwischen den Stiften (70) erstreckt, daß die Enden (92, 94) der Antiratterfedern (90) jeweils in einer entsprechenden Nut (80) sitzen, daß jedes Ende (92, 94) mit einem offeratterfeder (90) eine ringförmige Schleife (92) mit einem offenen Abschnitt (94) aufweist, daß die ringförmige Schleife (92) in einer zugehörigen Nut (80) sitzt, um den entsprechenden Stift (70) axial festzulegen, daß die Abstützstellen (23, 24, 25, 26) jeweils eine radiale Wand (23, 25) aufweisen, die mit einem Loch (24, 26) zur gleitenden Aufnahme des zugehörigen Stiftes (70) versehen ist, und daß jede Schleife (92) in einer Nut (80) sitzt und axial zwischen der zugehörigen Trägerplatte (54, 67) und radialen Wand (23, 25) positioniert ist.

2. Scheibenbremse nach Anspruch 1, dadurch gekennzeichnet, daß jeder Bremsbacken (34, 36) eine Trägerplatte (54, 56) aufweist, wobei die Öffnung (64, 66) in den Trägerplatten (54, 56) angeordnet und radial außerhalb des Umfangs der Bremsbacken (34, 36) angeordnet sind.

3. Scheibenbremse nach Anspruch 1 oder 2, dadurch gekennzeichnet, daß jedes Ende (92, 94) der Antiratterfeder (90) radial einwärts in Richtung auf eine zentrale Achse des Bremssattels (12) verläuft und an einer Umfangsfläche eines zugehörigen Bremsbackens (34, 36) angreift, ehe er quer über die radial äußeren Abschnitte der Bremsbacken (34, 36) verläuft.

4. Scheibenbremse nach einem der vorhergehenden Ansprüche, dadurch gekennzeichnet, daß die Antiratterfeder (90) im wesentlichen Z-förmig ausgebildet ist und jeden Stift (70) an nur einer Nut (80) erfaßt, um den entsprechenden Stift (70) festzulegen.

5. Scheibenbremse nach einem der vorhergehenden Ansprüche, dadurch gekennzeichnet, daß die offenen Abschnitte (94) der Feder (90) radial außerhalb der Bremsscheibe (40) angeordnet sind.

6. Scheibenbremse nach einem der vorhergehenden Ansprüche, dadurch gekennzeichnet, daß der Bremssattel (12) auf dem Bremsträger (20) mittels Bolzen (22) gleitend gelagert ist, die an dem Bremsträger (20) fest angebracht sind.

**Revendications**

1. Frein à disque comprenant un étrier (12) supporté de manière coulissante sur un organe de réception de couple (20) comportant un pont (16) s'étendant en travers d'un disque (40) et des pistons afin de mettre un patin de friction (34) en contact avec un côté (42) dudit disque (40) et, par réaction à travers l'étrier (12), un second patin de friction (36) en contact avec l'autre côté (42) dudit disque (40), chaque patin de friction (34 et 36) ayant deux ouvertures (64, 66) servant de support, des goupilles (70) s'étendant entre deux positions de support (23 et 24) (25 et 26) sur ledit étrier (12) et s'étendant à travers les ouvertures respectives (64, 66) afin de positionner les patins de friction (34, 36) pour coulisser le long desdites goupilles (70), des moyens de ressort anti-bruit (90) comprenant un ressort anti-cliquetis (90) s'étendant entre lesdites goupilles (70) et au-dessus des parties radialement externes desdits patins de friction (34, 36), le ressort anti-cliquetis ayant deux extrémités disposées en regard (92, 94) chacune engageant et accrochant une goupille correspondante (70) afin d'immobiliser cette dernière axialement, le ressort (90) engageant les parties externes radialement desdits patins (34, 36) afin de déplacer ces derniers radialement vers l'intérieur contre lesdites guipilles (70), caractérisé en ce que chaque goupille (70) a une gorge (80) située près de son extrémité et que le ressort anti-cliquetis (90) s'étend en diagonale entre lesdites goupilles (70) chaque extrémité (92, 94) du ressort (90) logée dans une gorge (80), chaque extrémité (92, 94) du ressort (90) comprenant une boucle de forme annulaire (92) ayant une partie ouverte (94), la boucle de forme annulaire étant logée dans une gorge correspondante (80) afin d'immobiliser axialement la goupille correspondante (70), chaque position de support (23, 24, 25, 26) comprenant une paroi radiale (23, 25) avec un trou (24, 26) pouvant recevoir de manière coulissante la goupille correspondante (70), et chaque boucle (92) étant logée dans une gorge (80) et placée axialement entre la plaque de support associée (54, 55) et la paroi radiale (23, 25).

2. Frein à disque selon la revendication 1, caractérisé en ce que chaque patin de friction (34, 36) inclut une plaque de support (54, 56), les ouvertures (64, 66) étant disposées dans les plaques de support (54, 56) et situées radialement vers l'extérieur à la périphérie des patins de friction (34, 36).

3. Frein à disque selon les revendications 1 et 2, caractérisé en ce que chaque extrémité du ressort anti-cliquetis (92, 94) s'étend radialement vers l'intérieur vers l'axe central de l'étrier (12) et engage la surface circonférentielle du patin de friction (34, 36) correspondant avant de s'étendre transversalement à travers les parties radialement extérieures desdits patins de friction (34, 36).

4. Frein à disque selon n'importe laquelle des revendications précédentes, caractérisé en ce que le ressort anti-cliquetis (90) est en forme de Z et engage chaque goupille (70) à une seule gorge (80) afin d'immobiliser la goupille correspondante (70).

5. Frein à disque selon n'importe laquelle des revendications ci-dessus, caractérisé en ce que les parties ouvertes (94) du ressort (90) sont disposées radialement vers l'extérieur par rapport au disque (40).

6. Frein à disque selon n'importe laquelle des revendications ci-dessus, caractérisé en ce que l'étrier (12) est supporté de manière coulissante sur le support (20) au moyen de gougeons (22).

FIG. 1

FIG. 2